(19) Europäisches Patentamt
European Patent Office
Office européen des brevets

(11) **EP 2 021 400 B1**

(12) **EUROPÄISCHE PATENTSCHRIFT**

(45) Veröffentlichungstag und Bekanntmachung des Hinweises auf die Patenterteilung:
**11.01.2012 Patentblatt 2012/02**

(51) Int Cl.:
*C08G 77/388* ⁽²⁰⁰⁶·⁰¹⁾    *A01N 43/00* ⁽²⁰⁰⁶·⁰¹⁾
*C09D 183/08* ⁽²⁰⁰⁶·⁰¹⁾

(21) Anmeldenummer: 07722426.9

(22) Anmeldetag: **15.05.2007**

(86) Internationale Anmeldenummer:
**PCT/DE2007/000878**

(87) Internationale Veröffentlichungsnummer:
**WO 2007/131487 (22.11.2007 Gazette 2007/47)**

(54) **VERWENDUNG VON AMINMODIFIZIERTEN SILOXANEN ALS SCHUTZMITTEL IN BESCHICHTUNGEN UND WERKSTÜCKEN**

USE OF AMINE-MODIFIED SILOXANES AS PROTECTING AGENTS FOR COATINGS AND WORKPIECES

UTILISATION DE SILOXANES MODIFIÉS PAR UNE AMINE COMME AGENTS PROTECTEURS DANS DES REVÊTEMENTS ET DES PIÈCES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.05.2006   DE 102006023415**

(43) Veröffentlichungstag der Anmeldung:
**11.02.2009   Patentblatt 2009/07**

(73) Patentinhaber: **Fraunhofer-Gesellschaft zur Förderung der angewandten Forschung e.V.
80686 München (DE)**

(72) Erfinder:
• **FRIEBEL, Stefan
38173 Evensen (DE)**
• **PHILIPP, Claudia
38106 Braunschweig (DE)**

(74) Vertreter: **Kröncke, Rolf et al
Gramm, Lins & Partner
Patent- und Rechtsanwaltssozietät GbR
Freundallee 13a
30173 Hannover (DE)**

(56) Entgegenhaltungen:
**US-A- 4 359 545    US-A- 5 075 403**

## Beschreibung

Die vorliegende Erfindung betrifft die Verwendung von bestimmten aminmodifizierten Polysiloxanen, die mindestens eine Moleküleinheit mit einem aminmodifizierten Rest und mindestens eine Moleküleinheit mit einem hydrophilen Rest aufzeigt, als mikrobiozide Schutzmittel. Diese Schutzmittel sind geeignet, Materialien, wie Holz und andere Stoffe auf Basis von Cellulose und/oder Lignin, aber auch andere Materialien, wie Kunststoffe, mineralische Stoffe und Metalle, gegenüber dem Befall und der Ausbreitung von schädigenden Mikroorganismen, wie Pilzen, zu schützen. Weiterhin betrifft die vorliegende Erfindung ein Verfahren zur Behandlung von Werkstücken und Oberflächen von Werkstücken gegen den Befall mit Mikroorganismen umfassend das Aufbringen bzw. das Einbringen des erfindungsgemäßen Schutzmittels auf die Oberflächen bzw. in die Werkstücke.

## Stand der Technik

Mikroorganismen, wie Pilze oder Bakterien, befinden sich in der Regel auf allen Oberflächen, die uns im täglichen Leben umgeben. Obwohl die auf den Oberflächen vorhandenen Pilze oder Bakterien üblicherweise harmlos gegenüber Menschen sind, sind gerade in sensiblen Bereichen, wie z.B. in der Lebensmittelindustrie und der Medizin hohe Hygienestandards vorhanden, die eine sehr geringe Keimzahl vorsehen. Gerade in diesen beiden Bereichen werden keimfreie Oberflächen gefordert, die nur durch den Einsatz von keimtötenden Chemikalien realisiert werden können. Daher werden entsprechende Oberflächen mit Bioziden ausgestattet, um eine unkontrollierte Vermehrung von Mikroorganismen zu verhindern. Mikroorganismen benötigen dabei nur minimale Nährstoffmengen, z.B. können zu deren Wachstum oftmals lediglich einige Staubpartikel bei entsprechender Luftfeuchte ausreichend sein. Daher stellen viele Baumaterialien, wie z.B. Holz, Gips, Stein, Metalle und deren Beschichtungen ein Nährsubstrat für Mikroorganismen dar. Dabei sind die vorhandenen Mikroorganismen nicht nur für die mit den Oberflächen dieser Baumaterialien in Verbindung kommenden Personen schädigend, sondern können auch selbst zur Zerstörung der Baumaterialien und somit der Bauwerke beitragen, in dem sie die Bauteile und/oder deren Schutzschichten angreifen und zerstören.

So birgt z.B. ein Schimmelbefall in Innenräumen ein hohes allergenes und gesundheitliches Risiko. Von einigen Schimmelpilzarten sind die allergenen Wirkungen bereits bekannt. Es gilt in der Praxis das Minimierungsgebot, da auch bisher unauffällige Spezies sensibilisierend wirken können. Eine weitere Gefahr bilden die mykotoxinbildenden Schimmelpilze.

Das Wachstum der Mikroorganismen wird durch äußere Umstände weiter gefördert, wie z.B. hohe Luftfeuchtigkeit vor allen in Küchen und Bädern, keine oder nur geringe Durchlüftung der Räume sowie bauliche Gegebenheiten, z.B. Schränke, die eng an der Wand stehen etc. Ein weiterer Faktor, der zu einem erhöhten Auftreten von Mikroorganismen in Innenräumen beiträgt, ist auch die verbesserte Isolierung der Außenwände und der Fenster. Dies führt zu einem erhöhten Befall von Algen und Pilzen an Fassaden und Innenwänden. Die Luftfeuchtigkeit kondensiert an den kalten Wänden und bildet die für ein Wachstum erforderlichen Bedingungen.

Zum Schutz vor Mikroorganismen werden die Oberflächen und Gegenstände im Schadensfall oder vorbeugend mit biozid wirkenden Chemikalien behandelt. Diese Chemikalien sind häufig niedermolekulare, oft auch human-toxische Stoffe, die direkt oder in Lösung aufgebracht werden. Üblicherweise dringen diese Stoffe aufgrund ihrer chemischen Struktur und geringen Größe in die Zellen der Mikroorganismen ein, verändern dort Strukturen und töten sie ab. Diese als mikrobiozide Stoffe bekannten Verbindungen sind in der Lage die Mikroorganismen abzutöten bzw. als mikrobiostatische Substanzen ein Wachstum oder Vermehrung der Mikroorganismen zu hemmen ohne die Mikroorganismen selbst abzutöten. Mikrobizide Stoffe umfassen Algizide, Bakterizide, Fungizide usw.

Es gibt weiterhin die Klasse der kontaktmikrobiziden Stoffe, die nur mit der Zellmembran der Mikroorganismen in Kontakt treten und dort das Wachstum und die Ausbreitung der Mikroorganismen beeinflussen. Allerdings verbrauchen sich üblicherweise Mikrobizide in den Oberflächen mit der Zeit und bieten daher keinen dauerhaften Schutz.

Aminhaltige biozide Wirkstoffe sind z.B. in Form von quartären Ammoniumverbindungen (QUATS) aus der Literatur bekannt. Sie verfügen über ein breites Wirkspektrum gegenüber Pilzen. Die Wirksamkeit beruht auf dem Vorhandensein mindestens einer langen Alkylkette am Stickstoffatom. Diese tritt in Wechselwirkung mit der Zelloberfläche der Mikroorganismen und hindert sie dadurch am Wachstum. QUATS sind meist wasserlöslich und werden in wässrigen Lösungen angewendet. Es ist jedoch auch denkbar QUATS zu funktionalisieren und kovalent in ein Polymer anzubinden, z.B. vorgeschlagen in der EP 1 194 434 B1.

Die Wirksamkeit von Polymeren mit sekundärer Aminofunktionen wurde bereits beschrieben. So geht aus der EP 0 862 858 hervor, das Copolymere von ter.-Butylaminoethylmethacrylat inhärent mikrobizide Eigenschaften besitzen. Die DE 10024270 A1 beschreibt antimikrobielle Polymere aus Alkylacrylamiden, die selbst oder als Polymerblend Oberflächen dauerhaft mit antimikrobieller Wirkung ausstatten und zudem gegen Lösemittel und physikalischen Beanspruchungen widerstandsfähig sind.

Aminmodifizierte Siloxane sind als Weichmacher in der Textilindustrie bekannt. Unter anderem beschreibt die DE 197 39 991 A1 Aminosiloxan-Polyether-Polymere zur Textilbehandlung. Dabei werden die Verbindungen als Netz- und Dispergiermittel, Additive in Textilweichspülmitteln oder als Antischaumpulver beschrieben. Die funktionellen Gruppen der dort beschriebenen Polymere sind über Si-C und über Si-O-C-Bindungen verbunden. Das Verfahren zur Herstellung der dort beschriebenen Aminosiloxan-Polyether-Polymere erfolgt durch Kondensationsreaktionen von verschiedenen Silanen - bzw. Siloxanausgangsstoffen und Polyetherglykolen unter Abspaltung niedermolekularer Bestandteile.

Die DE 3928867 beschreibt aminofunktionelle Polysilxan-Polyoxyalkylen-Blockmischpolymerisate zur Zellöffnung von Polyurethanhartschäumen. Die US 3,389,160 offenbart organomodifizierte Siloxane mit dialkylamino- und hydroxyfunktionellen Gruppen. Sie enthalten im Gegensatz zu den hier beschriebenen modifizierten Siloxanen keine hydrophilen, z.B. polyetherfunktionellen, Gruppen. Der Anwendungsbereich dieser Moleküle liegt im Korrosionsschutz oder als Tenside für wässrige Systeme. Keines dieser Dokumente beschreibt eine antimikrobielle Wirkung dieser aminmodifzierten Polysiloxane.

In der DE 68921781 werden organosiliziumenthaltende quartäre Ammoniumverbindungen und deren antimikrobischen Wirksamkeit beschrieben. Dabei handelt es sich jedoch um Silanverbindungen nicht um Polysiloxane. Schließlich beschreibt die DE 4243399 Organopolysiloxanverbindungen mit Guanidylgruppen, die über eine antibakterielle Wirksamkeit verfügen. Oberflächenaktive Aspekte bleiben unberücksichtigt.

Weiterhin offenbaren die DE 199 39 866 und die US 4,541,936 Organopolysiloxane in wässrigen oder organischen Zusammensetzungen zur Behandlung von Papier und/oder Holz bzw. Holzprodukten. Eine mikrobizide z.B. fungizide Wirkung dieser dort beschriebenen aminmodifizierten Siloxane ist nicht genannt.

Die US 5,075,403 offenbart Polydiorganosiloxane, die Aminogruppen und Polyoxyalkylgruppen enthalten, ihre Herstellung und Ihre Verwendung als Additive zu Weichspüler für Textilien oder als Antischaummittel für Waschpulver.

Die US 4,359,545 beschreibt Zusammensetzungen zur Behandlung von Fasern umfassend zwei organofunktionale Polysiloxane, insbesondere zur Verhinderung elektrostatischer Aufladung, zur Absorption von Feuchtigkeit etc.

Gegenüber dem oben genannten Stand der Technik ist es somit Aufgabe der vorliegenden Erfindung die Verwendung von Verbindungen in Schutzmitteln, wie Lacksystemen bereitzustellen, die Oberflächen von Werkstücken oder die Werkstücke selbst, z.B. lignocellulosehaltige Materialien, wie Holz und Holzwerkstoffe, gegenüber mikrobiellem Befall schützen.

## Beschreibung der Erfindung

Die vorliegende Erfindung betrifft die Verwendung von aminmodifizierten Polysiloxanen in Schutzmitteln mit mikrobiziden Wirkungen, wie in Lacksystemen zum Schutz von Oberflächen. Genauer betrifft die vorliegende Erfindung die Verwendung der aminmodifizierten Polysiloxane als mikrobiozide Schutzmittel in Beschichtungssystemen und Werkstücken, wie Holz, mit dem die Beständigkeit gegenüber einem mikrobiellen Befall verbessert werden kann.

Das erfindungsgemäße verwendete mikrobiozide Schutzmittel ist insbesondere für Holz und Holzwerkstoffe, Spanplatten, mitteldichte Faserplatten, OSB-Platten, Papier, Kartonagen, Dämmplatten auf Lignocellulosebasis, Sperrholz und Funiere, die nachfolgend zusammenfassend als lignocellulosehaltige Materialien bezeichnet werden, gerichtet. Aber auch andere Werkstücke, wie solche aus Metallen, Kunststoffen, mineralischen Stoffen etc. können mit den erfindungsgemäß verwendbaren aminmodifizierten Polysiloxanen und geeigneten Beschichtungssystemen behandelt werden. Die erfindungsgemäß verwendbaren aminmodifizierten Polysiloxane können aber auch in Polymersystemen oder in Bindemitteln für die Herstellung von Werkstücken eingesetzt werden, um einen mikrobiellen Befall zu verhindern bzw. zu stoppen. Aufgrund der funktionellen Reste der erfindungsgemäß verwendbaren aminmodifizierten Polysiloxane reichern sich diese in den Oberflächenbereichen der Werkstücke an.

Dabei weisen die erfindungsgemäß verwendbaren aminmodifzierten Polysiloxane, die im folgenden auch als aminmodifzierte Polysiloxane oder auch als Aminosilikone bezeichnet werden, eine mikrobizide, wie eine fungizide bzw. mikrobiostatische, wie eine fungistatische Wirkung auf. Diese aminmodifzierten Polysiloxane besitzen dabei mindestens eine Moleküleinheit mit einem aminmodifizierten Rest und mindestens eine Moleküleinheit mit einem hydrophilen Rest, wobei diese beiden Reste gegebenenfalls an einer Moleküleinheit vorliegen können. Es wurde nämlich überraschend gefunden, dass Polysiloxane, die mit diesen beiden Resten, den aminmodifzierten Rest und den hydrophilen Rest, wie einem Polyetherrest, modifiziert wurden, neben antimikrobiellen, speziell fungistatischen Eigenschaften, auch aufgrund ihres "tensidischen" Aufbaus derart verteilt im Werkstück oder Beschichtung vorliegen, dass an der Oberfläche des behandelten Werkstücks bzw. Beschichtung die erfindungsgemäßen aminmodifizierten Polysiloxane in höheren Konzentration vorliegen als im übrigen Bereich des Werkstücks oder der Beschichtung. Weiterhin enthalten diese Verbindungen keine niedermolekularen Substanzen, die durch Migration ökologisch problematische Stoffe darstellen. Vielmehr wird durch die spezielle Struktur des Moleküls und den dadurch ausgebildeten tensidischen Charakter, nämlich dem gleichzeitigen Vorhandensein von hydrophilen und hydrophoben Gruppen, erreicht, dass es zu einer Anreicherung und optimalen Ausrichtung des Moleküls an der Oberfläche des Beschichtungssystems, wie des Lacksystems kommt, so dass nur eine geringe Menge davon in dem Beschichtungssystem notwendig ist, um die mikrobizide Wirksamkeit zu erzielen. Somit liegen die erfindungsgemäßen Verbindungen gerade nicht homogen verteilt in der Beschichtung oder dem behandelten Werkstück vor.

Konventionelle Biozide werden Beschichtungsstoffen üblicherweise in flüssiger Darreichungsform homogen beigemengt. Bei dieser Technologie bleibt ein Großteil des Wirkstoffs ungenutzt im Inneren des Polymers. Außerdem wird ein Teil des Biozids durch Witterungseinflüsse ausgewaschen und degeneriert. Hier kommt es zu zusätzlichen Kosten bei der Herstellung und einer erhöhten Belastung der Umwelt durch die Biozide.

Durch den spezifischen Aufbau der erfindungsgemäßen aminmodifizierten Siloxane, die mindestens eine Moleküleinheit mit einem aminmodifizierten Rest und mindestens eine Moleküleinheit mit einem hydrophilen Rest, wie einen Polyetherrest umfassen, ist es möglich, die bioziden Strukturen optimal an der Oberfläche, dem Wirkort der antimikrobiellen Funktion, der Beschichtungsstoffe bzw. der Werkstelle, wie Kunststoffen anzureichern, um eine größtmögliche mikrobizide Wirksamkeit zu erzielen. Dabei sollte die Migration der Verbindung (z.B. Auswaschen) möglichst gering sein.

Wie ausgeführt, weisen die aminmodifizierten Siloxane mindestens zwei Moleküleinheiten mit funktionell modifizierten Resten auf, nämlich mindestens eine Siloxaneinheit, die mit einem Amin modifiziert wurde und mindestens eine Siloxaneinheit, die mit einem hydrophilen Rest, wie einem Polyether, modifiziert wurde. Dabei können die beiden Reste, der hydrophile Rest und der aminmodifizierte Rest, an einer Siloxaneinheit vorhanden sein.

Es handelt sich sich bei dem erfindungsgemäß verwendbaren aminmodifizierten Polysiloxan um ein Polysiloxan mit der folgenden Zusammensetzung, wobei das aminmodifizierten Polysiloxan mindestens eine Moleküleinheit I

$$R_a X_b SiO \frac{(4-a-b)}{2} \qquad (I)$$

und eine Moleküleinheit II

$$R_c SiO \frac{(4-c)}{2} \qquad (II)$$

hat, wobei

X jeweils unabhängig voneinander einen aminmodifizierten Rest $X^1$ oder einen hydrophilen Rest $X^2$ darstellt und $X_1$ und $X_2$ mindestens einmal In dem aminmodifizierten Polysiloxan vorliegen.

R ist jeweils unabhängig voneinander eine gesättigte, ungesättigte, gradkettige, verzweigte oder zyklische Alkyl-, Alkenyl- oder Alkoxygruppe mit $C_1$ bis $C_{18}$ Kohlenstoffatomen, die gegebenenfalls substituiert sein kann;

a ist eine ganze Zahl von 0, 1 oder 2;

b ist eine ganze Zahl von 1, 2 oder 3, wobei die Summe von a und b 1, 2 oder 3 ist;

c ist eine ganze Zahl von 0, 1, 2 oder 3.

In einer bevorzugten Ausführungsform ist dabei die Verbindung eine, in der der Rest $X^1$ eine aminofunktionelle Gruppe der folgenden allgemeinen Formel ist:

$$-R^1\text{-}O\text{-}R^2\text{-}C(OH)H\text{-}CH_2\text{-}N(R^4)2.$$

wobei $R^1$ und $R^2$ jeweils unabhängig voneinander eine gesättigte oder ungesättigte, gerade verzweigte oder zyklische Alkylen-, oder Alkenylengruppe mit $C_1$ bis $C_{18}$ Kohlenwasserstoffen bedeuten, die gegebenenfalls substituiert sein kann.

Besonders bevorzugt sind $R^1$ und $R^2$, solche mit $C_1$ bis $C_6$ Kohlenwasserstoffen, insbesondere sind $R^1$ und $R^2$ jeweils unabhängig voneinander eine Methylen-, Ethylen-, Propylen-, Butylen-, Pentylen- oder Hexylengruppe.

Die Gruppe $R^4$ kann gleich oder verschieden sein und stellt jeweils unabhängig voneinander Wasserstoff oder eine gradkettige, verzweigte oder zyklische $C_1$ bis $C_{18}$ Kohlenwasserstoffgruppe dar, die gegebenenfalls substituiert sein kann. $R^4$ ist dabei eine Alkyl- oder Alkenylgruppe. Bevorzugt ist $R^4$ unabhängig voneinander eine $C_4$ bis $C_{12}$ Kohlenwasserstoffgruppe, insbesondere eine Butyl-, Pentyl-, Hexyl-, Heptyl-, Octyl-, Nonyl-, Decyl-, Undecyl- und Dodecylgruppe dar.

So kann in einer Ausführungsform der vorliegenden Erfindung das aminmodifizierte Polysiloxan eines sein, bei dem mindestens ein Rest $R^4$ kein Wasserstoff ist, d.h. die Amingruppe $-N(R^4)_2$ ist ein sekundäres oder tertiäres Amin.

In einer weiteren Ausführungsform kann die Amingruppe ein quaternäres Amin sein. Quaternäre Amingruppen $(N(R^4)^+)$ sind dem Fachmann wohl bekannt zusammen mit entsprechenden Gegenionen, wie Halogenidionen.

In einer weiteren bevorzugten Ausführungsform ist der hydrophile Rest $X^2$ der Moleküleinheit (I) eine hydrophile Polyethergruppe mit der folgenden allgemeinen Formel:

$$-R^1\text{-}(O\text{-}R^2\text{-})_n\, O\text{-}R^3$$

wobei $R^1$ und $R^2$ wie oben definiert sind, $R^3$ ist ein Wasserstoffatom oder eine $C_1$ bis $C_{18}$ gradkettige, verzweigte oder zyklische Alkyl- oder Alkenylgruppe die gegebenenfalls substituiert sein kann; n ist eine ganze Zahl von 1 bis 200, wie 1 bis 50.

$R^3$ ist bevorzugt eine Gruppe ausgewählt aus Methyl, Ethyl, Propyl, Isopropyl, Butyl, Isobutyl, Pentyl und Hexyl.

Bevorzugt sind die vorgenannten Alkyl-, Alkenyl- oder Alkoxygruppe, solche mit 1 bis 6 Kohlenstoffatomen. Insbesondere bevorzugt sind, R, $R^3$ und $R^4$ jeweils unabhängig voneinander ein Rest aus der Gruppe ausgewählt bestehend aus Methyl, Ethyl, Propyl, Isopropyl, Butyl, Isobutyl, Pentyl, Hexyl, Methoxy, Ethoxy, Propoxy, Isopropoxy, Butoxy, Isobutoxy, Pentoxy und/oder Hexoxy.

Im Allgemeinen, wenn eine Gruppe oder ein Rest substituiert sein kann, sind als Substituenten unabhängig voneinander eine oder mehrere von unten anderem C1 bis C6 Alkyl, C1 bis C6 Alkenyl, C1 bis C6 Alkoxy, OH, Halogen, Amino, Nitro, substituiertes oder unsubstituiertes Acyl, substituiertes oder unsubstituiertes Aryl oder Heteroaryl und dergleichen geeignet, diese können gegebenenfalls wieder substituiert sein.

Die Moleküleinheiten (I) und (II) sind dabei bevorzugt linear angeordnet. Bei einer linearen Anordnung der Moleküleinheiten ist c = 2 oder 3 und die Summe von a und b ist ebenfalls = 2 oder 3. In einer bevorzugten Ausführungsform ist das Verhältnis der Moleküleinheiten der allgemeinen Formel (I) und (II) zwischen 1:200 bis 20:1, insbesondere bevorzugt zwischen 10:25 bis 20:10. In der Moleküleinheit der allgemeinen Formel (I) ist dabei das Verhältnis des aminmodifizierten Rest $X^1$ zum hydrophilen Rest $X^2$ vorzugsweise 1:10 bis 10:1.

Bei Ausführungsformen, in denen die Moleküleinheit II mit c = 0 oder 1 vorliegen, handelt es sich um verzweigte Polysiloxanmoleküle, in denen diese Moleküleinheiten II mit c = 1 Verzweigselemente mit einer Verzweigung sind und Moleküleinheiten II mit c = 0 Verzweigungselemente mit zwei Verzweigungen sind, d.h. es befinden sich bei c = 0 vier Moleküleinheiten an diesen Verzweigungselementen. Daher ist der Anteil von Moleküleinheiten II mit c = 0 oder 1 sehr gering, z.B. kleiner 3 %, wie 1 %, um eine ausreichende geringe Viskosität und gute Löslichkeit sicherzustellen.

In einer weiteren bevorzugten Ausführungsform weist das aminmodifizierte Polysiloxan mindestens eine Moleküleinheit der allgemeinen Formel (I) auf, bei dem der Rest X einen Rest $X^3$ darstellt. Dieser Rest $X^3$ ist dabei eine vernetzbare Gruppe. Insbesondere stellt diese vernetzbare Gruppe $X^3$ eine funktionelle Gruppe dar, die Wechselwirkungen mit dem Beschichtungssystem oder bei Zufügen des erfindungsgemäßen aminmodifizierten Polysiloxans als mikrobizides Schutzmittel zu den Werkstoffzusammensetzungen, mit Komponenten dieser Werkstoffe bzw. des Beschichtungssystems Wechselwirkungen eingeht. Z.B. ist $X^3$ eine Acryloylgruppe, die mit strahlenhärtbaren UV-Lacksystemen umgesetzt werden können, eine Hydroxylgruppe, die mit den Isocyanatgruppen in 2-Komponenten-Polyurethan-Beschichtungsstoffen (2-K-PU) reagieren kann, eine Isocyanatgruppe für hydroxylhaltige Beschichtungsstoffe (wie z.B. 2-K-PU oder Acrylatsystemen), eine mehrfach ungesättigte Monocarbonsäure für Alkydsysteme oder eine Epoxidgruppe für Epoxylacke. Mit Hilfe dieser funktionellen Gruppe $X^3$ ist es möglich, die erfindungsgemäßen aminmodifizierten Polysiloxan kovalent an Polymere des Beschichtungssystems zu binden, so dass die vorteilhafte Anreicherung und optimale Ausrichtung der erfindungsgemäßen aminmodifizierten Polysiloxanmoleküle an der Oberfläche des Beschichtungsfilms aufrechterhalten bleibt.

Bei den Beschichtungssystemen oder den Polymersystemen handelt es sich um übliche Beschichtungssysteme und Polymersysteme, wie sie dem Fachmann wohlbekannt sind. Als Beschichtungssysteme seien hier beispielhaft Lacksysteme, Systeme auf Basis von Polyurethane, Polyester, Alkyde, Acrylate, Epoxide, UVvernetzbare Systeme, Einbrennlacke genannt.

Die erfindungsgemäßen aminmodifizierten Polysiloxane werden bevorzugt in einem Konzentrationsbereich von 0,05 % bis 20 % w/w, bevorzugt 0,2 % bis 8 % w/w in den Beschichtungssystemen oder den Polymersystemen verwendet, um die fungiziden oder fungistatischen Wirkungen zu erzielen.

Das erfindungsgemäße Beschichtungssystem mit mikrobiozidem Schutzmittel für Oberflächen von Werkstücken auf Basis eines mikrobiziden Beschichtungssystems umfasst ein erfindungsgemäßes aminmodifiziertes, d. h. ein solches Polysiloxan, das einen Rest $X_1$ mit einer aminofunktionellen Gruppe der folgenden allgemeinen Formel aufweist:

$$-R^1\text{-}O\text{-}R^2\text{-}C(OH)H\text{-}CH_2\text{-}N(R^4)_2$$

wobei $R^1$ und $R^2$ jeweils unabhängig voneinander eine gesättigte oder ungesättigte, gerade, verzweigte oder zyklische Alkylen-, oder Alkenylengruppe mit $C_1$ bis $C_{18}$ Kohlenstoffatome bedeuten, die gegebenenfalls substituiert sein kann; R4 ist jeweils unabhängig voneinander Wasserstoff, eine gradkettige, verzweigte oder zyklische $C_1$ bis $C_{18}$ Alkyl- oder Alkenylgruppe, die gegebenenfalls substituiert sein kann.

Das erfindungsgemäße aminmodifizierte Polysiloxan kann dabei dieselben Ausführungsformen aufweisen wie das erfindungsgemäß verwendbare aminmodifizierte Polysiloxan dessen Rest $X_1$ eine aminofunktionelle Gruppe der oben beschriebenen allgemeinen Formel: $-R^1\text{-}O\text{-}R^2\text{-}C(OH)H\text{-}CH_2\text{-}N(R^4)_2$ aufweist.

Das Beschichtungssystem mit den erfindungsgemäßen Schutzmitteln, den aminmodifizierten erfindungsgemäßen Polysiloxanen kann mit bekannten Verfahren auf die Werkstücke aufgebracht werden. Hierzu gehören Verfahren, wie ein Aufstreichen, Aufsprühen, Imprägnieren oder Tauchen. Wenn die aminmodifizierten Polysiloxane in Polymersysteme, Bindemittelsysteme oder andere Systeme zur Herstellung von Werkstücken eingebracht werden, kann dieses durch übliche Verfahren, wie einmischen, rühren, kneten etc. erfolgen.

Die erfindungsgemäßen aminmodifizierten Polysiloxane können auch in Verbindung mit weiteren bekannten Mikrobiziden eingesetzt werden. Natürlich können auch Mischungen von zwei oder mehr unterschiedlichen aminmodifizierten Polysiloxanen verwendet werden.

## Kurze Beschreibung der Abbildungen

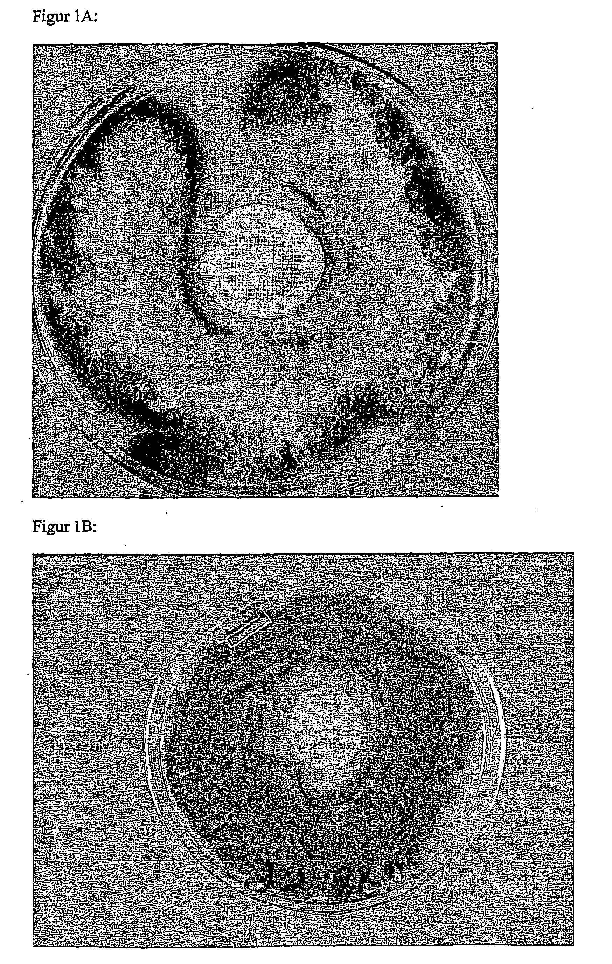

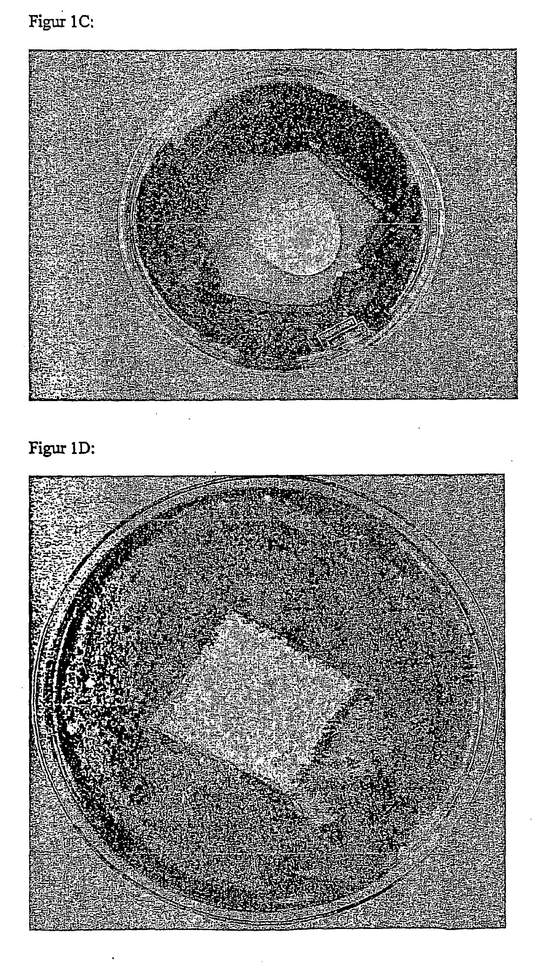

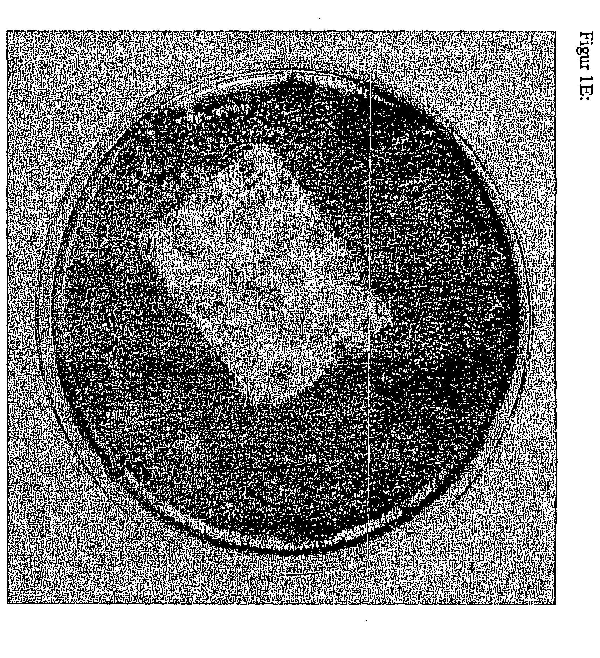

Die Figur 1 zeigt die Ergebnisse der im Beispiel 8 angeimpften Kulturplatten. A: Platte mit der aminmodifizierten Verbindung gemäß Beispiel 1; B: Platte mit der im Beispiel 2 erhaltenen erfindungsgemäßen Verbindung; C: Platte mit der im Beispiel 3 erhaltenen erfindungsgemäßen Verbindung; D: Platte mit der im Beispiel 4 erhaltenen erfindungsgemäßen Verbindung, die in ein Lacksystem gemäß Beispiel 6 eingearbeitet wurde; E: Kontrolle, Lacksystem ohne Zusatz einer erfindungsgemäßen Verbindung.

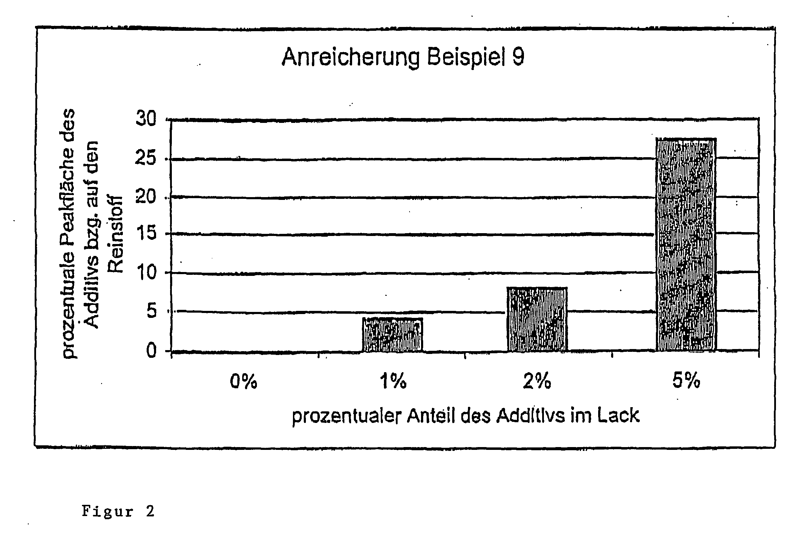

Die Figur 2 zeigt die Ergebnisse der ATR-FTIR-Analyse eines Lacksystems gemäß Beispiel 5. Dargestellt ist die prozentuale Peakfläche des Additivs bezogen auf den Reinstoff. Deutlich ist eine Anreicherung der aminmodifizierten Polysiloxane an der Oberfläche der ausgehärteten Lackfilme zu erkennen.

## Verfahren zur Herstellung

Die Darstellung des beschriebenen Polysiloxans erfolgt in zwei Reaktionsschritten. Als Ausgangsstoffe dienen unverzweigte Hydrogenmethyl-co-dimethyl-siloxane mit unterschiedlichem Gehalt an Si-H-funktionellen Gruppen.

Im ersten Schritt wird die hydrophile Gruppe, wie Polyether und Epoxyverbindungen, mit Allylfunktion an die Si-H-Gruppen addiert. Um mögliche Nebenreaktionen von Hydroxylgruppen mit den Si-H-Gruppen zu vermeiden, wird die Reaktion unter Stickstoff durchgeführt und Hexachloroplatinsäure als Katalysator verwendet. Die Reaktion wird bei 90-110 °C für 4 Stunden durchgeführt und verläuft quantitativ. Sie ist beendet, wenn keine Si-H-Bindungen mittels FTIR-Spektroskopie mehr nachweisbar sind.

Im zweiten Schritt wird der Epoxidring mit Hilfe des Amins geöffnet. Hierzu werden Temperaturen um 70-90 °C benötigt. Die Reaktion kann über die Abnahme der Epoxidzahl verfolgt werden. Im Produkt ist mittels Dünnschichtchromatographie kein freies Amin mehr nachweisbar. Die Molmasse der aminmodifizierten Polysiloxane liegt vorzugsweise in der Größenordnung 500-100.000 g/mol, bevorzugt 500-10.000 g/mol.

Die Kettenlänge des Polysiloxans wird bei dieser Reaktionsführung nicht verändert, da die Modifikationen des Hydrogenmethyl-co-dimethyl-siloxans in den Seitenketten und endständig stattfinden. Der Aufbau eines neuen Polysiloxangrundgerüstes aus Silanmonomeren (wie z.B. aminofunktionelle bzw. polyetherfunktionelle Chlorsilane, Methoxysiloxane und Silanole) ist ungeeignet. Zum einen müssen niedermolekulare Abspaltprodukte wie Chlorwasserstoff, Wasser oder Methanol aus dem System entfernt werden, zum anderen sind ungewünschte Nebenreaktionen der Epoxidgruppe zu erwarten.

### Beispiele

### A. Herstellung von aminmodifizierten Polysiloxanen

Beispiel 1

In einen Dreihalskolben mit Tropftrichter, Innenthermometer und Rürkflusskühler werden 4,400 g Allylpolyether (Molmasse 1100 glmol) und 1,368 g Allylglycidylether vorgelegt. Das Gemisch wird mit 70 mg Platinkatalysatorlösung (Hexachloroplatinsäure in Isopropanol, 1,27 %ig) versetzt und auf 40-60 °C aufgeheizt. 4,324 g Hydrogenmethyl-co-dimethylsiloxan (3,7 mmol Si-H/g) werden unter Rühren zugetropft. Die Reaktionslösung wird 4 h bei 90-100 °C gerührt. Nach dem Abkühlen auf 40-60 °C werden unter Rühren 2,898 g Dioctylamin gelöst und in 20 ml Ethanol zugetropft. Es wird bis zum Siedepunkt des Lösemittels erhitzt und 2 Stunden unter Rückfluss gerührt. Anschließend wird das Lösungsmittel im Vakuum entfernt.

Beispiel 2

In einen Dreihalskolben mit Tropftrichter, Innenthermometer und Rückflusskühler werden 4,200 g Allylpolyether (Molmasse 350 g/mol) und 0,456 g Allylglycidylether vorgelegt. Das Gemisch wird mit 60 mg Platinkatalysatorlösung (Hexachloroplatinsäure in Isopropanol, 1,27%ig) versetzt und auf 40-60 °C aufgeheizt. 4,324 g Hydrogenmethyl-co-dimethylsiloxan (3,7 mmol Si-H/g) werden unter Rühren zugetropft. Die Reaktionslösung wird 4 h bei 90-100 °C gerührt. Nach dem Abkühlen auf 40-60 °C werden unter Rühren 0,966 g Dioctylamin gelöst in 20 ml Ethanol zugetropft. Es wird bis zum Siedepunkt des Lösemittels erhitzt und 2 Stunden unter Rückfluss gerührt. Anschließend wird das Lösungsmittel im Vakuum entfernt.

Beispiel 3

In einem Dreihalskolben mit Tropftrichter, Innenthermometer und Rückflusskühler werden 1,400 g Allylpolyether (Molmasse 350 g/mol) und 1,368 g Allylglycidylether vorgelegt. Das Gemisch wird mit 60 mg Platinkatalysatorlösung (Hexachloroplatinsäure in Isopropanol, 1,27 %ig) versetzt und auf 40-60 °C aufgeheizt. 4,324 g Hydrogenmethyl-co-dimethylsiloxan (3,7 mmol Si-H/g) werden unter Rühren zugetropft. Die Reaktionslösung wird 4 h bei 90-100 °C gerührt. Nach dem Abkühlen auf 40-60 °C werden unter Rühren 2,898 g Dioctylamin gelöst in 20 ml Ethanol zugetropft. Es wird bis zum Siedepunkt des Lösemittels erhitzt und 2 Stunden unter Rückfluss gerührt. Anschließend wird das Lösungsmittel im Vakuum entfernt.

Beispiel 4

In einen Dreihalskolben mitTropftrichter, Innenthermometer und Rückflusskühler werden 4,000 g Allylpolyether (Molmasse 500 g/mol) und 0,912 g Allylglycidylether vorgelegt. Das Gemisch wird mit 70 mg Platinkatalysatorlösung (Hexachloroplatinsäure in Isopropanol. 1,27 %ig) versetzt und auf 40-60 °C aufgeheizt. 4,324 g Hydrogenmethyl-co-dimethylsiloxan (3,7 mmol Si-H/g) werden unter Rühren zugetropft. Die Reaktionslösung wird 4 h bei 90-100 °C gerührt. Nach dem Abkühlen auf 40-60 °C werden unter Rühren 1,932 g Dioctylamin gelöst in 20 ml Ethanol zugetropft. Es wird bis zum Siedepunkt des Lösemittels erhitzt und 2 Stunden unter Rückfluss gerührt. Anschließend wird das Lösungsmittel im Vakuum entfernt.

B. Beschichtungssysteme mit aminmodifizierten Siloxanen

Beispiel 5

Lacksystem mit folgender Zusammensetzung:

| | |
|---|---|
| Styrolacrylat-Dispersion | 87,6 Gew.-% |
| Polyethermodifiziertes Dimethylpolysiloxan-Copolymer | 0,5 Gew.-% |
| Entschäumer auf der Basis von Polysiloxanen und hydrophoben Feststoffen in Polyglykol | 0,4 Gew.-% |
| Butyldiglykol | 2,0 Gew.-% |
| Entmineralisiertes Wasser | 6,5 Gew.-% |
| Aminmodifiziertes Polyethersiloxan gemäß Bsp. 3 | 3,0 Gew.-% |

Beispiel 6

Lacksystem mit folgender Zusammensetzung:

| | |
|---|---|
| ca. 50 %ige wässrige Disperson eines Copolymers auf der Basis von 2-Ethylhexylacrylat und Methylmethacrylat | 90,7 Gew.% |
| Entschäumer auf der Basis von Polysiloxanen und hydrophoben Feststoffen in Polyglykol | 0,4 Gew.-% |
| Butyldiglykol | 2,0 Gew.-% |
| Netzadditiv auf der Basis von modifizierten Polysiloxanen | 0,5 Gew.-% |
| PU-Verdicker | 1,4 Gew.-% |
| Aminmodifiziertes Polyethersiloxan gemäß Bsp. 1 | 5,0 Gew.-% |

Beispiel 7

Lacksystem mit folgender Zusammensetzung:

| | |
|---|---|
| Bisphenol-A-Epoxyacrylat | 65,9 Gew.-% |
| Tripropylenglykol-diacrylat | 25,6 Gew.-% |
| Polyethermodifiziertes Dimethylpolysiloxan-Copolymer | 1,5 Gew.-% |
| Benzophenon | 2,0 Gew.-% |
| (1-Hydroxycyclohexyl)-phenylketon | 2,0 Gew.-% |
| Aminmodifiziertes Polyethersiloxan gemäß Bsp. 2 | 3,0 Gew.-% |

C. Darstellung der mikrobiziden Eigenschaften

Beispiel 8

Das Produkt aus den Beispielen 1 bis 3 wird als Reinstoff, das Produkt aus Beispiel 4 als 5 %iger Zusatz in einem Lacksystem nach Beispiel 6 verwendet. Die Proben werden in Petrischalen auf einen Agar(2 %)Blomalz(2 %)-Nährboden getropft bzw. gelegt, mit einer Pilzsporensuspension *(Aspergillus versicolor, Cladossporium cladosporoides, Alternaria alternata)* beimpft und bei 23 °C und einer relativen Luftfeuchtigkeit ≥ 90 % inkubiert. Während auf dem Referenzsystem (Lacksystem gemäß Beispiel 6 ohne Additiv) ohne aminmodifiziertem Additiv bereits nach einer Woche Pilzkolonien sichtbar sind, wird die Probe mit dem aminmodifizierten Polyethersiloxan selbst nach 4 Wochen nicht befallen.

Beispiel 9

Das Produkt aus Beispiel 1 wird in ein Lacksystem nach Beispiel 5 unter Weglassen anderer Siloxanaddditive) zu 1 %, 2 % und 5 Gew.-% eingearbeitet. Parallel wird ein Referenzlack ohne Additiv angefertigt. Die Oberflächen der ausgehärteten Lackfilme werden mittels ATR-FTIR-Spektroskopie untersucht. Bei dieser Methode werden nur wenige μm der Lackoberfläche betrachtet. Die Oberflächen unterscheiden sich genau um die Signale, die dem aminmodifizierten Additiv zuzuordnen sind. Es werden die Peakflächen aus dem Differenzspektrum (Lack mit Additiv minus Referenzlack) in Relation zu Peakflächen des Additivs als Reinstoff mit der jeweils eingesetzten Menge verglichen. Dabei wird deutlich, dass der Einsatz von 1 % Additiv im Lack mehr als 4 % der Peakfläche des Reinstoffs ausmacht. Der Stoff ist somit nicht gleichmäßig verteilt, sondern an der Oberfläche der Lackschicht angereichert. Der Effekt verstärkt sich bei zunehmender Einsatzmenge.

**Patentansprüche**

**1.** Verwendung von aminmodifizierten Polysiloxanen als mikrobizide Schutzmittel in Beschichtungssystemen und Werkstücken, wobei die aminmodifizierten Polysiloxane mindestens eine Moleküleinheit (I)

$$R_a X_b SiO \frac{(4-a-b)}{2} \qquad (I)$$

und eine Moleküleinheit (II)

$$R_c SiO \frac{(4-c)}{2} \qquad (II)$$

haben, wobei
X jeweils unabhängig voneinander einen aminmodifizierten Rest $X_1$ oder einen hydrophilen Rest $X_2$ darstellt und $X_1$ und $X_2$ mindestens einmal in dem aminmodifizierten Polysiloxan vorliegen;
R ist jeweils unabhängig voneinander eine gesättigte, ungesättigte, gradkettige, verzweige oder zyklische Alkyl-,

Alkenyl- oder Alkoxygruppe mit $C_1$ bis $C_{18}$ Kohlenstoffatomen, die gegebenenfalls substituiert sein kann;
a ist eine ganze Zahl zwischen 0, 1 oder 2;
b ist eine ganze Zahl zwischen 1, 2 oder 3, wobei die Summe von a und b 1, 2 oder 3 ist,
c ist eine ganze Zahl 0, 1, 2 oder 3.

2. Verwendung nach Anspruch 1, **dadurch gekennzeichnet, dass** der Rest $X_1$ eine aminofunktionelle Gruppe der folgenden allgemeinen Formel ist:

$$-R^1-O-R^2-C(OH)H-CH_2-N(R^4)_2,$$

wobei $R^1$ und $R^2$ jeweils unabhängig voneinander eine gesättigte oder ungesättigte, gerade, verzweigte oder zyklische Alkylen-, oder Alkenylengruppe mit $C_1$ bis $C_{18}$ Kohlenstoffatomen bedeuten, die gegebenenfalls substituiert sein kann; $R^4$ ist jeweils unabhängig voneinander Wasserstoff, eine gradkettige, verzweigte oder zyklische $C_1$ bis $C_{18}$ Alkyl- oder Alkenylgruppe, die gegebenenfalls substituiert sein kann.

3. Verwendung nach Anspruch 2, wobei mindestens ein $R^4$ kein Wasserstoff ist.

4. Verwendung nach Anspruch 2 oder 3, wobei $R^4$ jeweils unabhängig voneinander eine gradkettige, verzweigte oder zyklische $C_1$ bis $C_{18}$ Alkyl- oder Alkenylgruppe ist.

5. Verwendung nach Anspruch 1, wobei der aminmodifizierte Rest $X^1$ ein quaternäres Stickstoffatom umfasst zusammen mit einem Gegenion, bevorzugt einem Halogenidion.

6. Verwendung nach einem der Ansprüche 1 bis 5, **dadurch gekennzeichnet, dass** $X^2$ eine hydrophile Polyethergruppe mit der folgenden allgemeinen Formel darstellt

$$R^1-(O-R^2-)_n-O-R^3$$

wobei $R^1$ und $R^2$ unabhängig voneinander eine Alkylen oder Alkenylengruppe mit 1 bis 18 Kohlenwasserstoffen darstellen,
$R^3$ ist ein Wasserstoffatom oder eine gradkettige, verzweigte oder zyklische $C_1$ bis $C_{18}$ Alkyl- oder Alkenylgruppe, die gegebenenfalls substituiert sein kann; n ist eine ganze Zahl von 1 bis 200.

7. Verwendung gemäß einem der vorherigen Ansprüche, **dadurch gekennzeichnet, dass** R, $R^1$, $R^2$ und $R^3$ jeweils unabhängig voneinander 1 bis 6 Kohlenstoffatome aufweisen.

8. Verwendung gemäß einem der vorherigen Ansprüche, **dadurch gekennzeichnet, dass** das aminomodifizierte Polysiloxan eine Molmasse zwischen 500 und 100000 g/mol, bevorzugt zwischen 500 und 10000 g/mol aufweist.

9. Verwendung gemäß einem der vorherigen Ansprüche, **dadurch gekennzeichnet, dass** das Verhältnis der Moleküleinheiten der allgemeinen Formel (I) und (II) zwischen 1:200 bis 20:1 liegt.

10. Verwendung gemäß einem der vorherigen Ansprüche, **dadurch gekennzeichnet, dass** das Verhältnis des aminmodifizierten Anteils $X^1$ zum hydrophilen Anteil $X^2$ 1:10 bis 10:1 beträgt.

11. Verwendung gemäß einem der vorherigen Ansprüche, **dadurch gekennzeichnet, dass** das aminmodifizierte Polysiloxan mindestens eine Moleküleinheit (I) aufweist, bei dem der Rest X ein Rest $X^3$ ist, wobei $X^3$ eine vernetzbare Gruppe darstellt.

12. Verwendung gemäß einem der vorherigen Ansprüche, **dadurch gekennzeichnet, dass** die Nloleküleinheiten I und II linear angeordnet sind und c = 2 oder 3 und a+ b 2 oder 3 ist.

13. Verwendung gemäß einem der vorherigen Ansprüche, **dadurch gekennzeichnet, dass** das Schutzmittel weitere Mikrobizide, insbesondere Fungizide aufweist.

14. Verwendung gemäß einem der vorherigen Ansprüche, **dadurch gekennzeichnet, dass** das Schutzmittel eine Beschichtungszusammensetzung zur Beschichtung von Oberflächen ist.

**15.** Verwendung gemäß Anspruch 12, **dadurch gekennzeichnet, dass** das Beschichtungssystem eine Lackzusammensetzung für lignocellulosehaltige Materialien ist.

**16.** Verfahren zur Behandlung von Werkstücken und Oberflächen von Werkstücken gegen den Befall mit Mikroorganismen, insbesondere mit Pilzen, **dadurch gekennzeichnet, dass** ein aminmodifiziertes Polysiloxan nach einem der Ansprüche 2 bis 13 in die Materialien des Werkstücks, insbesondere einem Polymersystem oder einem Bindemittelsystem, eingebracht wird oder ein Schutzmittel gemäß einem der Ansprüche 2 bis 13, bevorzugt mit einem üblichen Beschichtungssystem auf die Oberfläche von Werkstoffen aufgebracht wird.

**17.** Beschichtungssystem mit mikrobiozidem Schutzmittel für Oberflächen von Werkstücken auf Basis eines mikobioziden Beschichtungssystems, **dadurch gekennzeichnet, dass** es ein aminomodifiziertes Polysiloxan, wie in einem der Ansprüche 2 bis 4 definiert, aufweist.

**18.** Aminmodifiziertes Polysiloxan wie in einem der Ansprüche 2 bis 4 definiert.

**Claims**

**1.** The use of amine-modified siloxanes as microbicidal protecting agents in coating systems and workpieces, the amine-modified siloxanes having at least one molecular unit I

$$R_a X_b SiO \frac{(4-a-b)}{2} \qquad (I)$$

and one molecular unit II

$$R_c SiO \frac{(4-c)}{2} \qquad (II)$$

where
X independently at each occurrence is an amine-modified radical $X^1$ or a hydrophilic radical $X^2$, and $X^1$ and $X^2$ occur at least once in the amine-modified siloxane;
R independently at each occurrence is a saturated, unsaturated, straight-chain, branched or cyclic alkyl, alkenyl or alkoxy group having $C_1$ to $C_{18}$ carbon atoms, and where appropriate may be substituted;
a is an integer 0, 1 or 2;
b is an integer 1, 2 or 3, the sum of a and b being 1, 2 or 3;
c is an integer 0, 1, 2 or 3.

**2.** The use as claimed in claim 1, **characterized in that** the radical $X^1$ is an amino-functional group of the following general formula

$$-R^1-O-R^2-C(OH)H-CH_2-N(R^4)_2$$

where $R^1$ and $R^2$ each independently of one another are a saturated or unsaturated, straight branched or cyclic alkylene or alkenylene group having $C_1$ to $C_{18}$ hydrocarbons, and where appropriate may be substituted; $R^4$ independently at each occurrence is hydrogen, a straight-chain, branched or cyclic $C_1$ to $C_{18}$ alkyl or alkenyl group, which where appropriate may be substituted.

**3.** The use as claimed in claim 2, wherein at least one $R^4$ is not hydrogen.

**4.** The use as claimed in claim 2 or 3, wherein $R^4$ independently at each occurrence is a straight-chain, branched or cyclic $C_1$ to $C_{18}$ alkyl or alkenyl group.

**5.** The use as claimed in claim 1, wherein the amine-modified radical $X^1$ comprises a quaternary nitrogen atom together with a counterion, preferably a halide ion.

6. The use as claimed in any one of claims 1 to 5, **characterized in that** $X^2$ is a hydrophilic polyether group with the following general formula

$$-R^1-(O-R^2-)_n-O-R^3$$

where $R^1$ and $R^2$ independently of one another are an alkylene or alkenylene group having 1 to 18 hydrocarbons, $R^3$ is a hydrogen atom or a straight-chain, branched or cyclic $C_1$ to $C_{18}$ alkyl or alkenyl group, which where appropriate may be substituted;
n is an integer 1 to 200.

7. The use as claimed in any one of the preceding claims, **characterized in that** R, $R^1$, $R^2$, and $R^3$ each independently of one another have 1 to 6 carbon atoms.

8. The use as claimed in any one of the preceding claims, **characterized in that** the amine-modified siloxane has a molar mass of between 500 and 100 000 g/mol, preferably between 500 and 10 000 g/mol.

9. The use as claimed in any one of the preceding claims, **characterized in that** the ratio of the molecular units of the general formula (I) and (II) is between 1:200 to 20:1.

10. The use as claimed in any one of the preceding claims, **characterized in that** the ratio of the amine-modified fraction $X^1$ to the hydrophilic fraction $X^2$ is 1:10 to 10:1.

11. The use as claimed in any one of the present claims, **characterized in that** the amine-modified polysiloxane has at least one molecular unit I in which the radical X is a radical $X^3$, $X^3$ being a crosslinkable group.

12. The use as claimed in any one of the preceding claims, **characterized in that** the molecular units I and arse arranged linearly and c is 2 or 3 and a + b is 2 or 3.

13. The use as claimed in any one of the preceding claims, **characterized in that** the protecting agent has further microbicides, more particularly fungicides.

14. The use as claimed in any one of the preceding claims, **characterized in that** the protecting agent is a coating composition for coating surfaces.

15. The use as claimed in claim 12, **characterized in that** the coating system is a surface-coating composition for lignocellulosic materials.

16. A method of treating surfaces of workpieces against infestation by microorganisms, more particularly by fungi, **characterized in that** an amine-modified siloxane as claimed in any one of claims 2 to 13 is incorporated into the materials of the workpiece, more particularly a polymer system or a binder system, or a amine-modified polysiloxane protecting agent as claimed in any one of claims 2 to 13, preferably with a typical coating system, is added to the surface of materials.

17. A coating system with microbicial protecting agent for surfaces of material on the basis of a microbicial coating system, **characterized in that** it has an amine-modified siloxane as defined in any one of claims 2 to 4.

18. An amine-modified polysiloxane as defined in any one of claims 2 to 4.

**Revendications**

1. Utilisation de polysiloxanes modifiés par amino comme agent de protection microbicide dans des systèmes de revêtement et des pièces, les polysiloxanes modifiés par amino présentant au moins une unité moléculaire (I)

$$R_a X_b SiO \frac{(4-a-b)}{2} \quad (I)$$

et une unité moléculaire (II)

$$R_c SiO \frac{(4-c)}{2} \qquad (II)$$

où

X représente, à chaque fois indépendamment l'un de l'autre, un radical modifié par amino $X_1$ ou un radical hydrophile $X_2$, et $X_1$ et $X_2$ se trouvent au moins une fois dans le polysiloxane modifié par amino ;
R représente, à chaque fois indépendamment l'un de l'autre, un groupe alkyle, alcényle ou alcoxy saturé, insaturé, linéaire, ramifié ou cyclique comprenant 1 à 18 atomes de carbone, qui peut le cas échéant être substitué ;
a vaut un nombre entier entre 0, 1 ou 2 ;
b vaut un nombre entier entre 1, 2 ou 3, la somme de a et b valant 1, 2 ou 3 ;
c vaut un nombre entier 0, 1, 2 ou 3.

2. Utilisation selon la revendication 1, **caractérisée en ce que** le radical $X_1$ est un groupe à fonctionnalité amino de la formule générale suivante ;

$$-R^1-O-R^2-C(OH)H-CH_2-N(R^4)_2,$$

où $R^1$ et $R^2$ signifient, à chaque fois indépendamment l'un de l'autre, un groupe alkylène ou alcénylène saturé ou insaturé, linéaire, ramifié ou cyclique comprenant $C_1$ à $C_{18}$ atomes de carbone, qui peut le cas échéant être substitué ;
$R^4$ représente, à chaque fois indépendamment l'un de l'autre, hydrogène, un groupe alkyle ou alcényle linéaire, ramifié ou cyclique en $C_1$ à $C_{18}$, qui peut le cas échéant être substitué.

3. Utilisation selon la revendication 2, au moins un $R^4$ n'étant pas de l'hydrogène.

4. Utilisation selon la revendication 2 ou 3, $R^4$ représentant, à chaque fois indépendamment l'un de l'autre, un groupe alkyle ou alcényle linéaire, ramifié ou cyclique en $C_1$ à $C_{18}$.

5. Utilisation selon la revendication 1, le radical modifié par amino $X^1$ comprenant un atome d'azote quaternaire, ensemble avec un contre-ion, de préférence un ion halogénure.

6. Utilisation selon l'une quelconque des revendications 1 à 5, **caractérisée en ce que** $X^2$ représente un groupe polyéther hydrophile présentant la formule générale suivante

$$R^1-(O-R^21)_n-O-R^3 \text{ où}$$

$R^1$ et $R^2$ représentent, indépendamment l'un de l'autre, un groupe alkyléne ou alcénylène comprenant 1 à 18 atomes de carbone,
$R^3$ représente un atome d'hydrogène ou un groupe alkyle ou alcényle linéaire, ramifié ou cyclique en $C_1$ à $C_{18}$, qui peut le cas échéant être substitué ;
n vaut un nombre entier de 1 à 200.

7. Utilisation selon l'une quelconque des revendications précédentes, **caractérisée en ce que** R, $R^1$, $R^2$ et $R^3$ présentent, à chaque fois indépendamment l'un de l'autre, 1 à 6 atomes de carbone.

8. Utilisation selon l'une quelconque des revendications précédentes, **caractérisée en ce que** le polysiloxane modifié par amino présente une masse molaire entre 500 et 100 000 g/mole, de préférence entre 500 et 10 000 g/mole.

9. Utilisation selon l'une quelconque des revendications précédentes, **caractérisée en ce que** le rapport des unités moléculaires des formules générales (I) et (II) se situe entre 1:200 à 20:1.

10. Utilisation selon l'une quelconque des revendications précédentes, **caractérisée en ce que** le rapport de la proportion modifiée par amino $X^1$ à la proportion hydrophile $X^2$ vaut 1:10 à 10:1.

**11.** Utilisation selon l'une quelconque des revendications précédentes, **caractérisée en ce que** le polysiloxane modifié par amino présente au moins une unité moléculaire (I) dans laquelle le radical X représente un radical $X^3$, $X^3$ représentant un groupe réticulable.

**12.** Utilisation selon l'une quelconque des revendications précédentes, **caractérisée en ce que** les unités moléculaires I et II sont disposées de manière linéaire et c = 2 ou 3 et a + b vaut 2 ou 3.

**13.** Utilisation selon l'une quelconque des revendications précédentes, **caractérisée en ce que** l'agent de protection contient d'autres microbicides, en particulier des fongicides.

**14.** Utilisation selon l'une quelconque des revendications précédentes, **caractérisée en ce que** l'agent de protection est une composition de revêtement pour le revêtement de surfaces.

**15.** Utilisation selon la revendication 12, **caractérisée en ce que** le système de revêtement est une composition de laque pour des matériaux contenant de la lignocellulose.

**16.** Procédé pour le traitement de pièces et de surfaces de pièces contre l'attaque par des microorganismes, en particulier des champignons, **caractérisé en ce qu'**un polysiloxane modifié par amino selon l'une quelconque des revendications 2 à 13 est introduit dans les matériaux de la pièce, en particulier dans un système de polymère ou un système de liant, ou un agent de protection selon l'une quelconque des revendications 2 à 13 est appliqué sur la surface des matériaux, de préférence par un système de revêtement usuel.

**17.** Système de revêtement comprenant un agent de protection microbicide pour surfaces de pièces à base d'un système de revêtement microbicide, **caractérisé en ce qu'**il contient un polysiloxane modifié par amino tel que défini dans l'une quelconque des revendications 2 à 4.

**18.** Polysiloxane modifié par amino tel que défini dans l'une quelconque des revendications 2 à 4.

Figur 1A:

Figur 1B:

Figur 1C:

Figur 1D:

Figur 1E:

**Anreicherung Beispiel 9**

prozentuale Peakfläche des Additivs bzg. auf den Reinstoff

30 — 25 — 20 — 15 — 10 — 5 — 0

0%  1%  2%  5%

prozentualer Anteil des Additivs im Lack

Figur 2

**EP 2 021 400 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1194434 B1
- EP 0862858 A
- DE 10024270 A1
- DE 19739991 A1
- DE 3928867
- US 3389160 A
- DE 68921781
- DE 4243399
- DE 19939866
- US 4541936 A
- US 5075403 A
- US 4359545 A